# FASCICULE DE BREVET EUROPEEN

(11) **EP 2 858 817 B1**
(45) Date de publication et mention de la délivrance du brevet: **27.09.2017**
(21) Numéro de dépôt: 13729932.7
(22) Date de dépôt: 07.06.2013
(51) Int. Cl.: B32B 7/12, B32B 13/08, B32B 27/10, B32B 27/30, B42D 15/00

(54) **DOCUMENT DE SECURITE A HAUTE DURABILITE**
SICHERHEITSDOKUMENT MIT HOHER HALTBARKEIT
HIGH-DURABILITY SECURITY DOCUMENT

(30) Priorité: 07.06.2012 FR 1255323
(43) Date de publication de la demande: 15.04.2015
(73) Titulaire: Banque De France, 75001 Paris (FR)
(72) Inventeur: BARATS, Michel, F-63800 Cournon d'Auvergne (FR); GUTKNECHT, Dan, 63170 Pérignat les Sarlieve (FR)
(74) Mandataire: Regimbeau
(86) Numéro de dépôt international: PCT/EP2013/061833
(87) Numéro de publication internationale: WO 2013/182692

(56) Documents cités:
- EP-A1- 1 338 430
- WO-A1-2004/072378
- DE-A1-102010 054 852

## Description

### Domaine de l'invention

L'invention concerne un document de sécurité ou de valeur, en particulier de type billet de banque présentant un substrat en papier fiduciaire imprimé, non imprimé ou partiellement imprimé, le document présentant une structure durable et apte à préserver la qualité et la spécificité du document, afin de prolonger sa durée d'utilisation, en particulier lorsque ce document est soumis à un environnement de circulation agressif.

L'invention concerne également un procédé de fabrication d'un tel document.

### Etat de l'art

Il existe des billets de banque comprenant un substrat papier formé à partir de fibres de coton et comprenant des signes de sécurité. La durée limitée des billets peut être due à la détérioration (mécanique, salissure) du substrat papier.

WO 2009/150117 décrit un papier sécurisé de type papier fiduciaire traité contre la salissure par application d'une composition à base de polyuréthanes. WO 91/12362 décrit une feuille imprimable de type papier fiduciaire traitée par une composition comprenant au moins une charge et au moins un liant élastomère. Parmi les élastomères possibles se trouvent les dispersions aqueuses de polyuréthane. Ces types de traitements agissent essentiellement sur la résistance à la salissure, augmentant de ce fait la durée de vie des documents en circulation, mais ne modifient pas de manière conséquente les caractéristiques mécaniques des documents.

WO 98/15418 décrit un billet de banque réalisé à partir d'un substrat entièrement en matériau polymère. Cependant un tel billet ne permet pas l'utilisation de certains signes de sécurité. Par ailleurs un tel billet est réalisé dans un matériau plus commun que le papier fiduciaire, et incompatible avec certains signes de sécurité habituels (filigrane, fil de sécurité,...), ce qui diminue la difficulté à falsifier. De plus, la durabilité du billet étant plus grande que celle de l'encre imprimée à sa surface, il en résulte des billets en circulation plus difficiles à identifier avec le temps.

WO 2004/028825 décrit un papier de sécurité formé à partir d'un substrat comprenant une couche de papier prise en sandwich entre deux couches de film, le film présentant au moins un signe de sécurité. De tels billets présentent un risque de séparabilité des films polymères ou du papier lui-même. De tels billets, dont les sécurités graphiques et les impressions se situent essentiellement sur les films contenant un primaire d'impression, présentent également des limites de durabilité liées à la tenue des encres, au même titre que les billets à substrat entièrement constitué de polymère. De ce fait, il est très souvent rendu nécessaire de prévoir de déposer une couche de vernis de protection à la surface de ces deux types de documents, afin de renforcer la tenue des encres sur le document en circulation.

WO 2010/146065 décrit un document de sécurité similaire comprenant en outre une imprégnation de la surface du papier par une composition contenant du polyuréthane. De tels documents présentent également des limites de durabilité liées à la tenue des encres.

### Présentation générale de l'invention

Un but de l'invention est de fournir un document de sécurité présentant une plus grande durabilité afin de prolonger sa durée d'utilisation, même lorsque ce document est soumis à de multiples manipulations, et/ou à un environnement de circulation agressif.

A cet effet, il est prévu un document de sécurité comprenant :
- un substrat papier comprenant une feuille présentant une première face et une deuxième face,
- un premier film en matériau polymère s'étendant sur la première face du substrat papier, et
- un deuxième film en matériau polymère s'étendant sur la deuxième face du substrat papier,
dans lequel le substrat papier est imprégné sur au moins une de ses faces d'une composition formant une imprégnation de polyuréthane, et dans lequel le substrat papier est collé à au moins l'un des films en matériau polymère au moyen d'une couche d'adhésif comprenant un copolymère éthylène-acétate de vinyle qui présente un pourcentage massique d'acétate de vinyle supérieur à 23%.

L'invention est avantageusement complétée par les caractéristiques suivantes, prises seules ou en une quelconque de leurs combinaisons techniquement possibles :
- le pourcentage massique d'acétate de vinyle est compris entre 23 % et 33 %,
- le pourcentage massique d'acétate de vinyle est compris entre 26 % et 33 %,
- le premier film en matériau polymère et le deuxième film en matériau polymère comprennent du polypropylène,
- le substrat papier présente sur au moins une de ses faces au moins une impression, chaque au moins une impression étant recouverte par le premier ou deuxième film en matériau polymère,
- le document de sécurité est un billet de banque.

L'invention concerne également un procédé de fabrication de documents de sécurité, comprenant des étapes de :
- imprégnation d'un substrat papier sous la forme d'une feuille présentant une première face et une deuxième face, la première face et la deuxième face étant imprégnées par une composition comprenant un polyuréthane,
- pelliculage du substrat papier par application d'un premier film en matériau polymère et d'un deuxième film en matériau polymère respectivement sur la première face et la deuxième face du substrat papier, par laminage du complexe formé du substrat papier et des films
- découpage du complexe pelliculé pour former plusieurs documents de sécurité,
l'étape de pelliculage comprenant une étape de collage au moyen d'une couche d'adhésif comprenant un copolymère éthylène-acétate de vinyle qui présente un pourcentage massique d'acétate de vinyle supérieur à 23 %.

L'invention est avantageusement complétée par les caractéristiques suivantes, prises seules ou en une quelconque de leurs combinaisons techniquement possibles :
- une étape d'impression du substrat papier et/ou d'au moins un des films,
- l'étape de collage est réalisée par activation lors du laminage, le laminage étant un laminage à chaud, de la couche d'adhésif préencollée sur une surface du film en matériau polymère,
- la couche d'adhésif est réalisée à partir d'un adhésif à l'état liquide, laminé entre chacun des films en matériau polymère et le substrat papier,
- le substrat papier comprend au moins un signe de sécurité réalisé immédiatement avant l'étape d'imprégnation ou avant l'étape de pelliculage,
- une étape de formation d'un motif à contraste de brillance sur l'un des films en matériau polymère.

### Présentation des figures

D'autres caractéristiques et avantages de l'invention apparaitront lors de la description ci-après d'un mode de réalisation. Aux dessins annexés :
- La figure 1 représente schématiquement des étapes d'un procédé conforme à un mode de mise en oeuvre de l'invention ;
- la figure 2 représente schématiquement une face illustrant un exemple de mode de réalisation d'un document de sécurité de type billet de banque selon l'invention ;
- la figure 3 représente schématiquement une vue en coupe du document de la figure 2 selon le plan I-II.

### Description de l'invention

### Exemple de procédé

### Fabrication du substrat papier

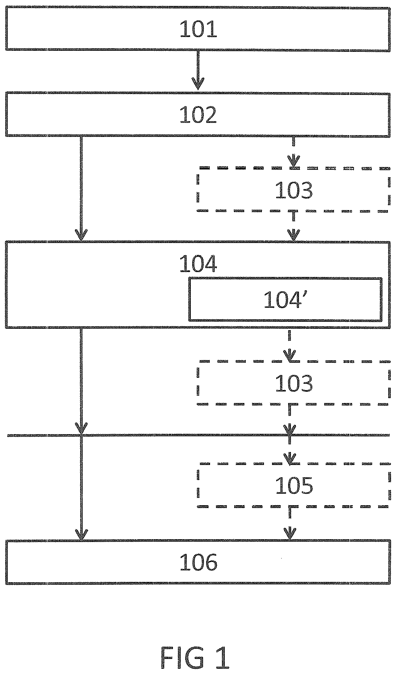

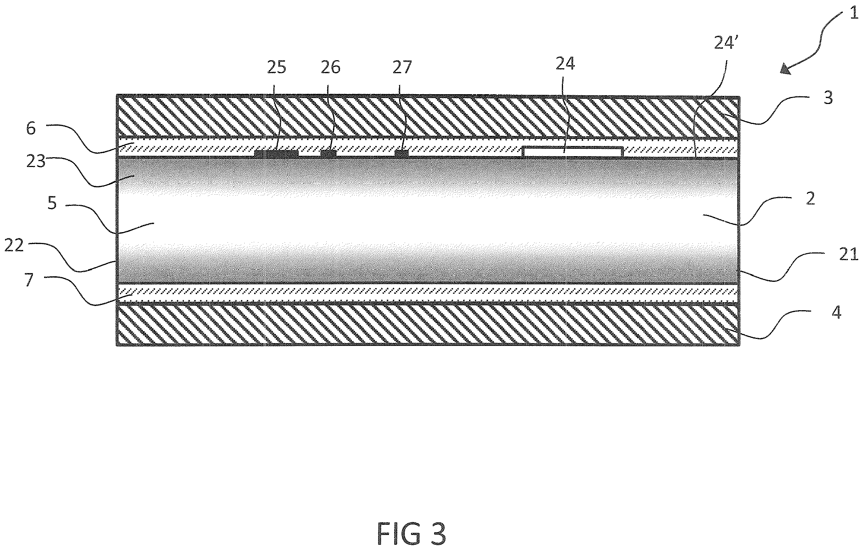

En référence aux figures 1 et 3, le procédé de fabrication de documents de sécurité comprend une première étape 101 de fabrication d'un substrat papier 2 sous la forme d'une feuille présentant une première face et une deuxième face. Le substrat papier 2 est formé à partir de fibres végétales, par exemple de fibres de bois, de fibres de plantes annuelles, par exemple de coton, complétées éventuellement par des fibres en matières synthétiques.

Selon un mode de réalisation possible, cette première étape 101 inclut l'ajout d'au moins un agent de collage en masse 5 à une suspension fibreuse. L'agent de collage en masse 5 peut comprendre de l'anhydride alkénylesuccinique et/ou l'un de ses dérivés. Alternativement ou en complément, l'agent de collage en masse 5 peut comprendre un dimère d'alkylcétène et/ou l'un de ses dérivés. Alternativement ou en complément, l'agent de collage en masse 5 peut comprendre de la colophane et/ou l'un de ses dérivés. Les tranches du billet sont ainsi avantageusement protégées.

### Imprégnation

Le procédé comprend une deuxième étape 102 d'imprégnation des faces du substrat papier 2 avant impression par une composition comprenant du polyuréthane 23. Cette imprégnation est réalisée en continu sur une machine à papier, sur la feuille sèche. Des dispositifs en continu de type bac d'imprégnation ou « size press » sont particulièrement adaptés pour réaliser cette imprégnation sur une machine à papier.

### Sécurisation / Impression

Le procédé comprend une troisième étape 103 d'impression du substrat papier 2 et/ou de films en matériau polymère 3 et 4. Cette étape d'impression peut avoir lieu avant et/ou après une étape de pelliculage. Réaliser l'étape d'impression avant l'étape de pelliculage permet de protéger les encres appliquées lors de cette étape vis-à-vis des contraintes inhérentes à la circulation des documents réalisés par le procédé. Une impression ainsi réalisée présente la même durabilité que le substrat papier 2 associé, ce qui augmente la durée de vie du document de sécurité.

Le substrat papier 2 peut également être sécurisé par des signes de sécurité 24 et réalisés avant l'étape 104 de pelliculage, c'est-à-dire lors des étapes de fabrication du papier 101, d'imprégnation 102 et éventuellement d'impression 103, dans le cas où l'étape 103 d'impression est réalisée avant l'étape de pelliculage.

### Pelliculage

Le procédé comprend une quatrième étape 104 de pelliculage au cours de laquelle le substrat papier 2 imprégné et éventuellement imprimé subit une application d'un premier film en matériau polymère 3 et d'un deuxième film en matériau polymère 4 respectivement sur la première face et la deuxième face de la feuille de substrat papier 2, par un procédé dit de pelliculage, au cours duquel les films sont laminés sur le papier, et ainsi collés à l'aide d'un adhésif situé aux interfaces papier / film. Le pelliculage peut être sec ou humide. Les films « recto » et « verso » peuvent être appliqués simultanément, sur un même groupe de pelliculage, en une seule passe, ou l'un après l'autre sur deux groupes distincts de pelliculage en une seule passe, ou en deux passes, à raison d'une application d'un film par passe.

Le premier film en matériau polymère et le deuxième film en matériau polymère peuvent comprendre du polypropylène.

Le pelliculage comprend une étape de collage 104' au moyen d'une couche d'adhésif 6, respectivement 7, comprenant un copolymère éthylène-acétate de vinyle entre le substrat papier 2 imprégné et éventuellement imprimé, et l'un des films en matériau polymère 3, respectivement 4.

Une formule de copolymère éthylène-acétate de vinyle, où n est le nombre de comonomère d'éthylène, et m le nombre de comonomères d'acétate de vinyle est donnée ci-après :

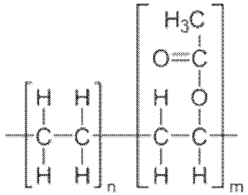

Le copolymère éthylène-acétate de vinyle présente un pourcentage massique d'acétate de vinyle supérieur à 23%. Le pourcentage massique d'acétate de vinyle est de préférence compris entre 23 % et 33 %. Le pourcentage massique d'acétate de vinyle est de préférence compris entre 26 % et 33 %.

La couche d'adhésif 6, respectivement 7, peut être préencollée sur une surface du film en matériau polymère 3, respectivement 4, avant pelliculage, et réactivée par l'action conjointe de la température et de la pression. Un tel procédé de pelliculage est dit « sec ». Typiquement, les températures employées lors du pelliculage dit « sec » s'étendent de 90 à 150°C.

Alternativement, la couche d'adhésif 6, respectivement 7 peut être utilisée à partir de l'état liquide pour former un film d'adhésif laminé lors du pelliculage entre le film en matériau polymère 3, respectivement 4, et le substrat papier 2. Ce procédé de pelliculage est dit « humide ».

### Motifs

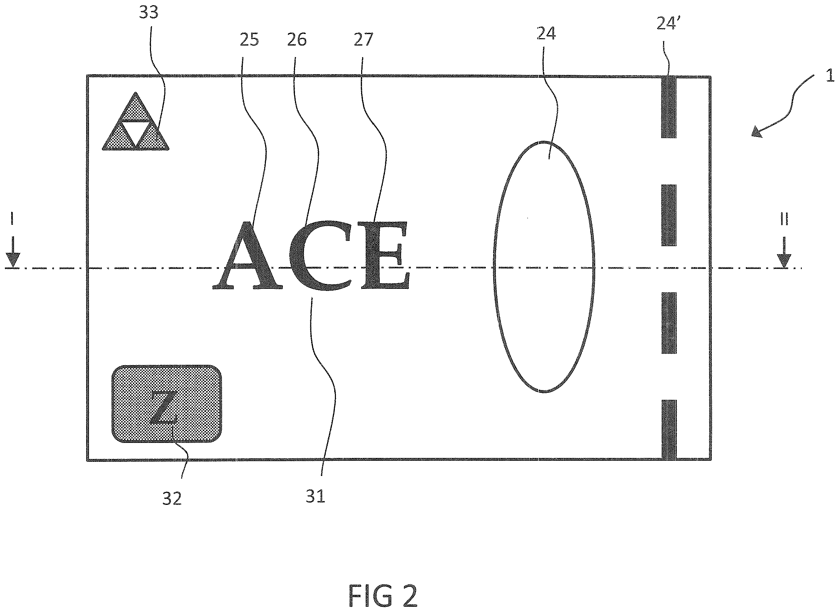

Le procédé peut comprendre une cinquième étape de formation 105 d'un motif à contraste de brillance 33 tel que représenté figure 2, sur le film en matériau polymère 3.

L'étape de formation 105 peut être réalisée après l'étape de pelliculage 104, ou sur un film en matériau polymère avant l'étape de pelliculage 104.

Le film en matériau polymère 3 présente ainsi une zone mate 31 au niveau de certains motifs imprimés 25, 26 et 27 du substrat papier imprimé 2 afin de ne pas perturber, par excès de brillance, la lecture optique du document en machine. Ceci est particulièrement utile dans le cas des machines de tri et d'authentification des billets de banque. Typiquement, une zone mate peut être définie comme présentant une brillance (mesurée à un angle d'environ 60°) inférieure à 20 unités de brillance, et préférentiellement inférieure à 10 unités de brillance. L'unité de brillance représente la proportion de lumière réfléchie spéculairement, par rapport à la lumière incidente à un angle de 60°. Le film en matériau polymère 3 présente de plus une zone brillante 32 au niveau de certains motifs imprimés du substrat papier 2, et / ou au niveau de certains signes de sécurité afin de permettre une lisibilité visuelle des motifs imprimés.

### Découpage

Le procédé comprend ensuite une sixième étape 106 de découpage, selon laquelle le complexe laminé est découpé pour former plusieurs documents de sécurité.

### Exemple de document

### Structure générale

En référence aux figures 2 et 3, il est décrit un document de sécurité 1 de type billet de banque en papier comprenant un substrat papier imprimé 2 et des films en matériau polymère 3 et 4. Le document peut être réalisé par le procédé de fabrication de documents de sécurité décrit ci-avant.

Le substrat papier imprimé 2 comprend un substrat papier 2 sous la forme d'une feuille présentant une première face et une deuxième face et ayant subi une impression et sur lequel se trouvent des signes de sécurité.

La feuille comprend une trame fibreuse. Le substrat papier imprimé 2 comprend des fibres végétales, par exemple de bois ou de plantes annuelles telles que le coton. Alternativement, le substrat papier imprimé 2 peut comprendre une structure de fibres de plantes renforcée par des fibres en matière synthétiques. Il est par exemple réalisé à partir de fibres de coton et de polyamide. Le substrat papier imprimé 2 peut être composé de plusieurs couches.

### Impressions et signes de sécurité

Le substrat papier imprimé 2 présente des motifs imprimés tels que les motifs 25, 26, 27.

Les motifs correspondent aux informations portées par le document, par exemple la valeur faciale du billet de banque, ou une illustration. Les motifs sont réalisés sur le substrat papier avant l'étape de pelliculage. Ainsi l'impression est plus aisée et les encres d'impression bénéficient de la protection des films en matériau polymère.

Les techniques d'impression peuvent être de type offset, sérigraphie, taille-douce, flexographie, héliographie, typographie, jet d'encre, en procédé feuille à feuille ou continu, encres à couleur changeante, hologrammes, micro-impression, ou toute autre technique d'impression connue de l'impression de sécurité.

Des signes de sécurité tels que les signes de sécurité 24 et 24' permettent de garantir l'authenticité du document de sécurité 1. Ils peuvent être incorporés dans le substrat papier, mais aussi être des signes imprimés. Par exemple le signe 24 peut être un filigrane. Le signe 24' représente un fil intégré dans l'épaisseur du papier. D'autres signes de sécurité peuvent être mis en oeuvre, II peut s'agir de couche fluorescente, de bande ou de zone métallisée à effet de diffraction, d'encre à couleur changeante, d'encre incolore, d'impression iridescente, de micro-impression, d'hologramme, d'image latente, d'impression taille-douce, de fibrettes fluorescentes, d'impression fluorescente, de couple infra-rouge, d'impression à couleur optiquement variable, de transvision, de magnétisme ou de toute autre technique de réalisation de signe de sécurité pour documents de sécurité.

### Films en matériau polymère

Le document de sécurité 1 comprend un premier film en matériau polymère 3 s'étendant sur la première face du substrat papier imprimé 2, et un deuxième film en matériau polymère 4 s'étendant sur la deuxième face du substrat papier imprimé 2.

Les films en matériau polymère 3 et 4 peuvent être complétés par plusieurs autres films en matériau polymère superposés. Les films en matériau polymère 3 et 4 permettent de protéger les deux faces du substrat papier imprimé 2. Les films en matériau polymère 3 et 4 permettent d'augmenter la résistance du document de sécurité 1, en particulier la résistance aux liquides, à l'abrasion, à la salissure, et la résistance mécanique. Les films en matériau polymère 3 et 4 sont transparents, c'est-à-dire que dans un spectre de longueur d'onde allant du proche ultraviolet au proche infrarouge, le taux de transmission de la lumière est supérieur à 85%. Les épaisseurs des films 3 et 4 en matériau polymère s'étendent typiquement de 4 à 30 µm. Les films polymère 3 et 4 peuvent être composées de BOPP (« *Biaxially Oriented PolyPropylene* », film de polypropylène bi-orienté en terminologie anglo-saxonne) ou de PET (« PolyEthylene Terephtalate » en terminologie anglo-saxonne). D'autres polymères transparents peuvent également être envisagés. Les films en matériau polymère 3 et 4 sont déposés par un procédé de pelliculage du substrat papier imprimé 2.

### Pelliculage

Le document 1 présente une première couche d'adhésif 6, respectivement une deuxième couche d'adhésif 7, entre le substrat papier imprimé 2 et le premier film en matériau polymère 3, respectivement le deuxième film en matériau polymère 4. Les couches d'adhésif comprennent un copolymère éthylène-acétate de vinyle qui présente un pourcentage massique d'acétate de vinyle supérieur à 23 %, de préférence entre 23 % et 33 %, préférentiellement entre 26 % et 33 %. Ces couches d'adhésif 6 et 7 permettent le collage des films en matériau polymère 3 et 4 sur les faces du substrat papier imprimé 2. Le pelliculage 104 est réalisé après imprégnation 102 et impression 103 du substrat papier 2 et avant la découpe unitaire des documents de sécurité 1. Une variante possible consiste à imprimer tout ou partie du document de sécurité sur le film de pelliculage.

Un premier exemple de technique de pelliculage, dite humide, consiste à utiliser une machine qui encolle les films en matériau polymère 3 et 4 d'un adhésif à partir de son état liquide. Le pelliculage est alors réalisé par laminage des films en matériau polymère 3 et 4 sur le substrat papier imprimé 2 par un système de rouleaux, durant lequel l'action conjointe de la pression et de la température permettent collage des films en polymère 3 et 4 sur chaque face de la feuille par les couches d'adhésif 6 et 7.

Un deuxième exemple de technique pelliculage, dite sèche, consiste à appliquer les films en polymère 3 et 4 déjà enduits d'un adhésif ré-activable à chaud. La colle est ré-activée par un laminage tel que décrit ci-avant.

Les films en matériau polymère 3 et 4 sont composés d'un matériau polymère, par exemple du polypropylène, qui peut se présenter en bobine, avec ou sans couche d'adhésif pré-encollée, et est contrecollé durant le pelliculage. Le pelliculage est réalisé avant découpe unitaire des documents de sécurité 1, sur une feuille comprenant plusieurs documents de sécurité 1.

Le pelliculage couvre un maximum de la surface des deux faces du document de sécurité 1. Il assure une résistance accrue au vieillissement des faces du document de sécurité 1, notamment vis-à-vis de la salissure et du déchirement.

### Couche d'adhésif

Les couches d'adhésif comprennent un copolymère éthylène-acétate de vinyle qui présente un pourcentage massique d'acétate de vinyle supérieur à 23 %, de préférence entre 23 % et 33 %, préférentiellement entre 26 % et 33 %.

La composition des couches d'adhésif selon l'invention est sensiblement différente de celle des adhésifs comprenant le copolymère éthylène - acétate de vinyle, utilisé dans le pelliculage traditionnel, qui contiennent un pourcentage massique d'acétate de vinyle d'environ 20 %, inférieur à 21 %.

De telles caractéristiques de composition peuvent être mesurées par une analyse par spectroscopie infrarouge à transformée de Fourier (FTIR, « *Fourier Transform Infra-Red Spectroscopy* » en terminologie anglo-saxonne). Le pourcentage massique est obtenu par mesure du rapport entre l'intensité du pic à 1737 cm⁻¹ du spectre obtenu, caractéristique de l'acétate de vinyle, et l'intensité du pic à 721 cm⁻¹ du spectre obtenu, caractéristique de l'éthylène.

Ces caractéristiques de composition peuvent par ailleurs être obtenues de manière plus précise par analyse thermique, en particulier par calorimétrie différentielle à balayage (DSC, *« Differential Scanning Calorimetry* » en terminologie anglo-saxonne). La température de fusion de l'EVA (copolymère Ethylène - Acétate de Vinyle en terminologie anglo-saxonne) ainsi mesurée est fonction de son taux d'acétate de vinyle.

L'intérêt d'un document de sécurité présentant une telle structure est mis en évidence par un test de durabilité cyclique réalisé sur quatre échantillons.

Le premier échantillon est obtenu à partir d'une feuille de sécurité produite sur une machine à papier à forme ronde, à partir d'une suspension aqueuse contenant :
- des fibres de coton,
- un agent de résistance à l'état humide tel qu'une résine polyamide amine cationique à 2 % par rapport à la masse de fibres,
- des charges de dioxyde de titane, par exemple concentrées à environ 2 % par rapport à la masse de fibres).
La production du premier échantillon comprend :
- après séchage de la feuille ainsi formée, une étape de passage dans un bain d'enduction comprenant une solution d'alcool polyvinylique, afin de former une imprégnation de 3 g / m² d'alcool polyvinylique, pour un grammage final de 85 g / m² ; des feuilles de sécurité ainsi produites constituent des substrats courants de billets de banque ;
- une étape d'impression en offset et en taille douce (d'autres techniques d'impression pouvant être employées en complément),
- une étape de pelliculage de la feuille par contre-collage à 110 °C sous une pression de 3 bars d'un premier film en BOPP et d'un deuxième film en BOPP respectivement sur la première face et la deuxième face de la feuille imprimée, les deux films étant appliqués sur un même groupe de pelliculage, et les films en BOPP présentant une couche d'adhésif comprenant un polymère EVA présentant un pourcentage massique d'acétate de vinyle d'environ 20% ;
- une étape de découpage de la feuille en plusieurs billets, chaque billet constituant un premier échantillon.

Le deuxième échantillon est obtenu de la même manière que le premier échantillon, à la différence près que la couche d'adhésif comprend un polymère EVA présentant un pourcentage massique d'acétate de vinyle d'environ 28 %.

Le troisième échantillon est obtenu de la même manière que le premier échantillon, à la différence près que le bain d'enduction comprend, à la place de la solution d'alcool polyvinylique, une dispersion de polyuréthane, comprenant de l'Esacote FB42 (Lamberti) et un réticulant de type Fissativo 05 (Lamberti). La dispersion est composée de :
- 90% en masse d'eau
- 10 % en masse sec d'Esacote FB42 + Fissativo 05, la part relative de Fissativo 05 par rapport à l'Esacote FB42 représentant 5% en masse sec/sec.
La viscosité finale est de 5 cP (centiPoises). Cette étape permet de former une imprégnation de 6,5 g / m² d'alcool polyvinylique, pour un grammage final de la feuille de 87 g / m².

Le quatrième échantillon, correspondant à l'invention, est obtenu de la même manière que le troisième échantillon, à la différence près que la couche d'adhésif comprend un polymère EVA présentant un pourcentage massique d'acétate de vinyle d'environ 28 %. Les quatre échantillons sont soumis à un essai de durabilité cyclique, chaque cycle présentant des étapes successives de :
- plongement dans une eau déminéralisée à 70 °C durant trois minutes,
- retrait de l'excès d'eau en surface du document entre des buvards,
- froissage manuel,
- dégradation par deux sessions de cinquante tours dans une machine de dégradation de papier présentant une enceinte balayée par une hélice souple tournant à une vitesse de 3000 tours par minute,
- analyse visuelle des échantillons.

Le cycle est répété jusqu'à constatation du délaminage des films en BOPP, dans une limite de sept cycles.

Dès le premier cycle, les premier et deuxième échantillons présentent un délaminage de 5 à 10 mm sur tous les bords des billets. Le billet selon le troisième échantillon présente une durabilité accrue puisqu'un délaminage de 2 mm est constaté au premier cycle, le délaminage atteignant 5 à 8 mm au bout de cinq cycles. Le quatrième échantillon ne présente aucun délaminage après sept cycles.

Ainsi l'association d'un substrat papier présentant une imprégnation de polyuréthane et de films de polymère collés au substrat papier imprégné par des couches d'adhésif présentant un pourcentage massique d'acétate de vinyle élevé présente-t-elle une durabilité élevée par rapport aux documents selon l'art antérieur.

En effet, la composition de la couche d'adhésif permet d'éviter un délaminage, même partiel des films de polymères laminés sur les faces du substrat papier imprégné.

### Imprégnation

Le substrat papier du document 1 est imprégné d'une composition contenant du polyuréthane 23. L'imprégnation polyuréthane confère d'une part une bonne adhésion avec l'adhésif EVA à fort taux d'acétate de vinyle, et apporte d'autre part, une résistance à la pénétration de liquide au niveau des tranches 21 et 22 du document 1, ce qui permet d'accroitre considérablement la résistance au délaminage.

L'imprégnation est réalisée, une fois la feuille formée et séchée en machine à papier, par trempage dans un bain contenant du polyuréthane. Une variante possible est de réaliser l'application de la composition contenant du polyuréthane 23 par « size press ».

### Agent de collage en masse

De manière complémentaire à l'imprégnation de polyuréthane, le document 1 peut comprendre au moins un agent de collage en masse dans le substrat papier 2. L'agent de collage en masse est incorporé à la suspension fibreuse, avant formation de la feuille sur machine à papier.

Le document 1 peut comprendre plusieurs agents de collage en masse.

L'agent de collage peut comprendre de l'anhydride alkénylesuccinique (ASA) ou l'un de ses dérivés. L'agent de collage peut comprendre de la colophane ou l'un de ses dérivés. L'agent de collage peut comprendre un dimère d'alkylcétène (AKD) ou l'un de ses dérivés. Ces agents hydrophobes se fixent aux fibres de papier. Ils confèrent au substrat papier imprimé 2 pelliculé une haute résistance à la pénétration de liquide au niveau des tranches 21 et 22, et ainsi, conjointement à l'imprégnation polyuréthane, contribuent à la haute résistance au délaminage du complexe.

### Brillance des films en matériau polymère

Les films en polymère 3 et 4 présentent une zone mate 31 au niveau de certains motifs imprimés, par exemple 25, 26 et 27 du substrat papier imprimé 2 afin de permettre l'analyse du document en machine de tri par lecture optique. En effet un film en polymère trop brillant n'est pas lisible par les capteurs de telles machines de tri. II est considéré qu'une zone est mate si sa brillance est inférieure à 20 unités de brillance mesurée à un angle de 60°, préférentiellement inférieure à 10 unités de brillance.

Les films en polymère 3 et 4 peuvent présenter une zone brillante 32 au niveau de certains motifs imprimés du substrat papier imprimé 2 afin d'en assurer une meilleure lisibilité et/ou un meilleur rendu esthétique. La zone brillante 32 peut correspondre à une zone sur laquelle on souhaite attirer l'attention.

Les films en polymère 3 et 4 peuvent présenter des zones de brillance contrôlée présentant des motifs à contraste de brillance par alternance de zones mates et brillantes. Par exemple, les films en polymère 3 et 4 peuvent présenter un motif esthétique à contraste de brillance 33. Les zones brillantes peuvent être générées en recouvrant des zones des films mates 3 et 4 par un vernis qui ravive l'état de surface des films en polymère 3 et 4. A l'inverse, un vernis matifiant peut être appliqué sur des films brillants pour diminuer la brillance des films dans certaines zones.

## Revendications

1. Document de sécurité (1) comprenant :
- un substrat papier (2) comprenant une feuille présentant une première face et une deuxième face,
- un premier film en matériau polymère (3) s'étendant sur la première face du substrat papier (2), et
- un deuxième film en matériau polymère (4) s'étendant sur la deuxième face du substrat papier (2),
dans lequel le substrat papier (2) est imprégné sur au moins une de ses faces d'une composition formant une imprégnation de polyuréthane (23), et
dans lequel le substrat papier est collé à au moins l'un des films en matériau polymère au moyen d'une couche d'adhésif (6, 7) comprenant un copolymère éthylène-acétate de vinyle qui présente un pourcentage massique d'acétate de vinyle supérieur à 23 %.

2. Document de sécurité (1) selon la revendication 1, **caractérisé en ce que** le pourcentage d'acétate de vinyle est compris entre 23 % et 33 %.

3. Document de sécurité (1) selon la revendication 2, **caractérisé en ce que** le pourcentage massique d'acétate de vinyle est compris entre 26 % et 33 %.

4. Document de sécurité (1) selon l'une quelconque des revendications précédentes, **caractérisé en ce que** le premier film en matériau polymère (3) et le deuxième film en matériau polymère (4) comprennent du polypropylène.

5. Document de sécurité (1) selon l'une quelconque des revendications précédentes, **caractérisé en ce que** le substrat papier (2) présente sur au moins une de ses faces au moins une impression, chaque au moins une impression étant recouverte par le premier (3) ou deuxième (4) film en matériau polymère.

6. Document de sécurité (1) selon quelconque l'une des revendications, **caractérisé en ce que** le document de sécurité est un billet de banque.

7. Procédé de fabrication de documents de sécurité (1), comprenant des étapes de :
- imprégnation (102) d'un substrat papier (2) comprenant une feuille présentant une première face et une deuxième face, la première face et la deuxième face étant imprégnées par une composition comprenant du polyuréthane (23),
- pelliculage (104) du substrat papier (2) par application d'un premier film en matériau polymère (3) et d'un deuxième film en matériau polymère (4) respectivement sur la première face et la deuxième face du substrat papier (2), par laminage du complexe formé du substrat papier (2) et des films (3, 4),
- découpage (106) du complexe pelliculé pour former plusieurs documents de sécurité,
l'étape de pelliculage comprenant une étape de collage au moyen d'une couche d'adhésif (6, 7) comprenant un copolymère éthylène-acétate de vinyle qui présente un pourcentage massique d'acétate de vinyle supérieur à 23 %.

8. Procédé selon la revendication 7 comprenant une étape d'impression (103) du substrat papier (2) et/ou d'au moins un des films (3, 4).

9. Procédé selon l'une des revendications 7 et 8, **caractérisé en ce que** l'étape de collage est réalisée par activation lors du laminage, le laminage étant un laminage à chaud, de la couche d'adhésif (6, 7) préencollée sur une surface du film en matériau polymère (3, 4).

10. Procédé selon l'une des revendications 7 et 8, **caractérisé en ce que** la couche d'adhésif (6, 7) est réalisée à partir d'un adhésif à l'état liquide, laminé entre chacun des films (3, 4) en matériau polymère et le substrat papier (2).

11. Procédé selon l'une quelconque des revendications 7 à 10, **caractérisée en ce qu'**il comprend une étape de collage en masse du substrat papier (2).

12. Procédé selon l'une quelconque des revendications 7 à 11, dans lequel le substrat papier (2) comprend au moins un signe de sécurité (24, 24') réalisé immédiatement avant l'étape d'imprégnation (102) ou avant l'étape de pelliculage (104).

13. Procédé selon l'une des revendications 7 à 12, comprenant une étape de formation (105) d'un motif à contraste de brillance (33) sur l'un des films en matériau polymère (3, 4).

## Patentansprüche

1. Sicherheitsdokument (1), umfassend:
- Papiersubstrat (2), umfassend ein Blatt, das eine erste Seite und eine zweite Seite aufweist;
- eine erste Folie aus Polymermaterial (3), die sich auf der ersten Seite des Papiersubstrats (2) erstreckt, und
- eine zweite Folie aus Polymermaterial (4), die sich auf der zweiten Seite des Papiersubstrats (2) erstreckt,
bei dem das Papiersubstrat (2) auf wenigstens einer seiner Seiten mit einer Zusammensetzung imprägniert ist, die eine Polyurethanimprägnierung (23) bildet und
bei dem das Papiersubstrat auf wenigstens einer der Folien aus Polymermaterial mittels einer Haftschicht (6, 7) verklebt ist, die ein EthylenVinylacetat-Copolymer umfasst, das einen Masseprozentsatz an Vinylacetat von mehr als 23 % aufweist.

2. Sicherheitsdokument (1) gemäß Anspruch 1, **dadurch gekennzeichnet, dass** der Prozentsatz an Vinylacetat zwischen 23 % und 33 % inbegriffen ist.

3. Sicherheitsdokument (1) gemäß Anspruch 2, **dadurch gekennzeichnet, dass** der Masseprozentsatz an Vinylacetat zwischen 26 % und 33 % inbegriffen ist.

4. Sicherheitsdokument (1) gemäß irgendeinem der voranstehenden Ansprüche, **dadurch gekennzeichnet, dass** die erste Folie aus Polymermaterial (3) und die zweite Folie aus Polymermaterial (4) Polypropylen umfassen.

5. Sicherheitsdokument (1) gemäß irgendeinem der voranstehenden Ansprüche, **dadurch gekennzeichnet, dass** das Papiersubstrat (2) auf wenigstens einer seiner Seiten wenigstens einen Aufdruck aufweist, wobei wenigstens jeder eine Aufdruck mit der ersten (3) oder zweiten (4) Folie aus Polymermaterial abgedeckt ist.

6. Sicherheitsdokument (1) gemäß irgendeinem der Ansprüche, **dadurch gekennzeichnet, dass** das Sicherheitsdokument eine Banknote ist.

7. Herstellungsverfahren von Sicherheitsdokumenten (1), umfassend die Schritte:
- des Imprägnierens (102) eines Papiersubstrats (2), umfassend ein Blatt, das eine erste Seite und eine zweite Seite aufweist, wobei die erste Seite und die zweite Seite mit einer Zusammensetzung imprägniert sind, die Polyurethan (23) umfasst,
- des Überziehens (104) des Papiersubstrats (2) per Anwendung einer ersten Folie aus Polymermaterial (3) und einer zweiten Folie aus Polymermaterial (4) jeweils auf der ersten Seite und der zweiten Seite des Papiersubstrats (2) per Walzen des aus dem Papiersubstrat (2) und der Folien (3, 4) gebildeten Komplexes,
- des Ausschneidens (106) des überzogenen Komplexes zum Bilden mehrerer Sicherheitsdokumente,
wobei der Überziehschritt einen Klebeschritt mittels einer Haftschicht (6, 7) umfasst, die ein EthylenVinylacetat-Copolymer umfasst, das einen Masseprozentsatz an Vinylacetat von mehr als 23 % aufweist.

8. Verfahren gemäß Anspruch 7, umfassend einen Druckschritt (103) des Papiersubstrats (2) und / oder wenigstens eine der Folien (3, 4).

9. Verfahren gemäß einem der Ansprüche 7 und 8, **dadurch gekennzeichnet, dass** der Klebeschritt per Aktivierung bei dem Walzen realisiert ist, wobei das Walzen ein Warmwalzen der Haftschicht (6, 7) ist, die auf einer Fläche der Folie aus Polymermaterial (3, 4) vorverklebt ist.

10. Verfahren gemäß einem der Ansprüche 7 und 8, **dadurch gekennzeichnet, dass** die Haftschicht (6, 7) ausgehend von einem Haftkleber in flüssigem Zustand realisiert ist, zwischen jeder der Folien (3, 4) aus Polymermaterial und dem Papiersubstrat (2) gewalzt ist.

11. Verfahren gemäß irgendeinem der Ansprüche 7 bis 10, **dadurch gekennzeichnet, dass** es einen Klebeschritt des Papiersubstrats (2) in der Masse umfasst.

12. Verfahren gemäß irgendeinem der Ansprüche 7 bis 11, bei dem das Papiersubstrat (2) wenigstens ein Sicherheitszeichen (24, 24') umfasst, das unverzüglich vor dem Imprägnierungsschritt (102) oder vor dem Überziehschritt (104) realisiert ist.

13. Verfahren gemäß einem der Ansprüche 7 bis 12, umfassend einen Bildungsschritt (105) eines Musters mit glänzendem Kontrast (33) auf einer der Folien aus Polymermaterial (3, 4).

## Claims

1. Security document (1) comprising:
- a paper substrate (2) comprising a sheet having a first face and a second face;
- a first film made of polymer material (3) extending over the first face of the paper substrate (2), and
- a second film made of polymer material (4) extending over the second face of the paper substrate (2),
in which the paper substrate (2) is impregnated on at least one of the faces thereof with a composition forming an impregnation of polyurethane (23), and
in which the paper substrate is bonded to at least one of the films made of a polymer material by means of an adhesive layer (6, 7) comprising an ethylene-vinyl acetate copolymer which has a weight percentage of vinyl acetate greater than 23%.

2. Security document (1) according to claim 1, **characterised in that** the weight percentage of vinyl acetate is comprised between 23% and 33%.

3. Security document (1) according to claim 2, **characterised in that** the weight percentage of vinyl acetate is comprised between 26% and 33%.

4. Security document (1) according to any of the preceding claims, **characterised in that** the first film made of polymer material (3) and the second film made of polymer material (4) comprise polypropylene.

5. Security document (1) according to any of the preceding claims, **characterised in that** the paper substrate (2) has on at least one of the faces thereof a print, each at least one print being covered by the first (3) or second (4) film made of polymer material.

6. Security document (1) according to any one of the claims, **characterised in that** the security document is a bank note.

7. Method for manufacturing security documents (1), comprising the steps of:
- impregnation (102) of a paper substrate (2) comprising a sheet having a first face and a second face, the first face and the second face being impregnated by a composition comprising polyurethane (23) ;
- film coating (104) of the paper substrate (2) by application of a first film made of polymer material (3) and a second film made of polymer material (4) respectively on the first face and the second face of the paper substrate (2), by lamination of the complex formed of the paper substrate (2) and the films (3, 4),
- cutting (106) the film coated complex to form several security documents.
the film coating step comprising a step of sizing by means of an adhesive layer (6, 7) comprising an ethylene-vinyl acetate copolymer which has a weight percentage of vinyl acetate greater than 23%.

8. Method according to claim 7, comprising a step of printing (103) the paper substrate (2) and/or at least one of the films (3, 4).

9. Method according to one of claims 7 and 8, **characterised in that** the sizing step is carried out by activation during laminating, the laminating being a hot laminating, of the adhesive layer (6, 7) pre-bonded on the surface of the film made of polymer material (3, 4) .

10. Method according to one of claims 7 and 8, **characterised in that** the adhesive layer (6, 7) is made from an adhesive in the liquid state, laminated between each of the films (3, 4) made of polymer material and the paper substrate (2).

11. Method according to any of claims 7 to 10, **characterised in that** it comprises a step of stock sizing the paper substrate (2).

12. Method according to any of claims 7 to 11, in which the paper substrate (2) comprises at least one security sign (24, 24') formed immediately before the impregnation step (102) or before the film coating step (104) .

13. Method according to one of claims 7 to 12, comprising a step of formation (105) of a brightness contrast pattern (33) on one of the films made of polymer material (3, 4).
